# EUROPÄISCHE PATENTSCHRIFT

(11) **EP 1 133 377 B1**
(45) Veröffentlichungstag und Bekanntmachung des Hinweises auf die Patenterteilung: **22.10.2003**
(21) Anmeldenummer: 99960925.8
(22) Anmeldetag: 16.11.1999
(51) Int. Cl.: B23K 26/10, B22F 3/105

(54) **VORRICHTUNG UND VERFAHREN ZUM ABTASTEN EINER OBJEKTFLÄCHE MIT EINEM LASERSTRAHL**
METHOD AND DEVICE FOR SCANNING THE SURFACE OF AN OBJECT WITH A LASER BEAM
DISPOSITIF ET PROCEDE DE BALAYAGE DE LA SURFACE D'UN OBJET A L'AIDE D'UN FAISCEAU LASER

(30) Priorität: 23.11.1998 DE 19853979
(43) Veröffentlichungstag der Anmeldung: 19.09.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: MEINERS, Wilhelm, D-52072 Aachen (DE); WISSENBACH, Konrad, D-52134 Herzogenrath (DE); GASSER, Andres, D-52066 Aachen (DE)
(74) Vertreter: Gagel, Roland, Dr.
(86) Internationale Anmeldenummer: DE9903669
(87) Internationale Veröffentlichungsnummer: WO00030802

(56) Entgegenhaltungen:
- DE-A- 19 818 469
- DE-C- 3 445 613
- US-A- 5 298 717

## Beschreibung

### Technisches Gebiet

Die Erfindung betrifft eine Vorrichtung und ein Verfahren zum Abtasten einer Objektfläche mit einem Laserstrahl, insbesondere zum selektiven Laser-Schmelzen von Metallpulver zur Herstellung eines Formkörpers, beispielsweise des Prototyps eines Bauteils. Die gattung zeigt die DE-A-19 818 469.

Die vorliegende Erfindung bezieht sich in erster Linie auf eine Technik, die unter dem Namen Rapid Prototyping bekannt ist. Rapid Prototyping-Verfahren werden in der Produktentwicklung eingesetzt, um die Produktentwicklungszeit zu verkürzen sowie die Produktqualität zu steigern. Dies wird dadurch ermöglicht, daß mittels der Rapid Prototyping-Verfahren Prototypen sehr schnell direkt aus dem 3D CAD Modell hergestellt werden können. Die bisher erforderliche zeitaufwendige Erstellung eines NC-Programms für eine Fräs- oder Erodierbearbeitung oder die Herstellung formgebender Werkzeuge entfällt.

Die Entwicklung neuer bzw. die Weiterentwicklung bestehender Rapid Prototyping-Verfahren hat das Ziel, möglichst seriennahe oder sogar serienidentische Werkstoffe verarbeiten zu können. Dies gilt vor allem für metallische Prototypen oder Prototyp-Werkzeuge. Das bekannte Verfahren des selektiven Laser-Schmelzens ermöglicht die Herstellung von Bauteilen aus handelsüblichen Stählen. Die Bauteile werden, wie bei allen Rapid Prototyping-Verfahren, schichtweise hergestellt. Dazu wird der Werkstoff in Pulverform jeweils als dünne Schicht auf eine Bauplattform aufgebracht. Das Pulver wird lokal, entsprechend der Bauteilgeometrie der zu bearbeitenden Schicht, mit einem Laserstrahl aufgeschmolzen. Die mit diesem Verfahren hergestellten Bauteile aus Stahl (z.B. aus Edelstahl 1.4404) erreichen bzgl. ihrer Dichte und Festigkeit die angegebenen Werkstoffspezifikationen. Damit können sie als Funktionsprototypen oder direkt als fertiges Bauteil eingesetzt werden.

### Stand der Technik

In der DE 196 49 865 C1 wird hierzu ein Verfahren vorgeschlagen, bei dem ein bindemittel- und flußmittelfreies metallisches Werkstoffpulver auf die Bauplattform aufgebracht und durch den Laserstrahl entsprechend der Bauteilgeometrie auf Schmelztemperatur erhitzt wird. Die Energie des Laserstrahls wird so gewählt, daß das metallische Werkstoffpulver an der Auftreffstelle des Laserstrahls über seine gesamte Schichtdicke vollständig aufgeschmolzen wird. Der Laserstrahl wird bei diesem Verfahren in mehreren Spuren derart über den vorgegebenen Bereich der jeweiligen Werkstoffpulverschicht geführt, daß jede folgende Spur des Laserstrahls die vorherige Spur teilweise überlappt. Gleichzeitig wird eine Schutzgasatmosphäre über der Wechselwirkungszone des Laserstrahls mit dem metallischen Werkstoffpulver aufrechterhalten, um Fehlstellen zu vermeiden, die beispielsweise durch Oxidation hervorgerufen werden können.

Die zur Bauteilkontur gehörende Fläche jeder Schicht wird bei den Verfahren des selektiven Laser - Schmelzens zeilenweise vom fokussierten Laserstrahl abgefahren. Die erreichbare Detailauflösung und die Oberflächenqualität der hergestellten Teile hängen dabei entscheidend vom Durchmesser des fokussierten Laserstrahls ab.

Zur Bewegung eines fokussierten Laserstrahls auf einer feststehenden Bearbeitungsebene sind bisher zwei grundsätzlich unterschiedliche Techniken bekannt.

Im Zusammenhang mit dem Rapid Prototyping mittels Laser- bzw. Lichtstrahl werden in der Regel optische Scannersysteme eingesetzt. Beim Scannersystem erfolgt die Positionierung und Bewegung des fokussierten Laserstrahls auf der Bearbeitungsebene für jede Richtung (x-und y- Richtung) durch Verdrehung jeweils eines Spiegels. Die Verwendung einer Scanneroptik bei einem Verfahren zum Laserstrahl-Sintern ist beispielsweise in der Veröffentlichung von Heinz Haferkamp et al., Laserstrahl-Sintern zur Herstellung von Blechformwerkzeugen, in der Zeitschrift "BLECH ROHRE PROFILE, 43 (1996) 6, Seiten 317 bis 319, schematisch dargestellt.
Der Nachteil des Scannersystems liegt jedoch darin, daß bei einem vorgegebenen maximalen Drehwinkel der Spiegel die Größe der bearbeitbaren Fläche von der Brennweite der Fokussieroptik abhängt. Eine Vergrößerung der bearbeitbaren Fläche kann nur durch eine längere Brennweite erreicht werden. Mit der Vergrößerung der Brennweite vergrößert sich jedoch bei sonst gleichen optischen Elementen auch der Fokusdurchmesser des Laserstrahls. Die erreichbare Detailauflösung und die Oberflächenqualität der hergestellten Teile werden damit reduziert.

Aus anderen Bereichen der Materialbearbeitung mit Lasern ist auch der Einsatz von Plottersystemen bekannt. Beim Plottersystem wird der Laserstrahl entlang zweier Linearachsen geführt. Durch geeignete Bewegung der Achsen kann der Laserstrahl jede beliebige Bahn auf der Bearbeitungsebene beschreiben.
Die Verwendung eines Plottersystems hat den Vorteil, daß die Größe der bearbeitbaren Fläche nur durch die Länge der verwendeten Linearachsen begrenzt ist. Außerdem kann auf einfache Weise eine Schutzgasdüse durch Kopplung an die Linearachsen gleichzeitig mit dem Laserstrahl mitbewegt werden.
Der Nachteil des Plottersystems liegt jedoch darin, daß sich aufgrund der Mechanik mit einem Plottersystem im Vergleich zum Scannersystem nur wesentlich geringere Bearbeitungsgeschwindigkeiten realisieren lassen. Insbesondere die für das selektive Laser-Schmelzen bevorzugten Bearbeitungsgeschwindigkeiten von > 200 mm/s lassen sich mit einem Plottersystem nicht mit ausreichender Genauigkeit realisieren.

Aus der DE 34 45 613 C1 ist ein Verfahren zur Herstellung länglicher Bauteile mit Durchmessern im Mikrobereich mittels Laserschmelzen bekannt, bei dem eine Schablone mit entsprechend der Form der Mikroteile ausgestalteten länglichen Vertiefungen verwendet wird, in die Metallpulver eingefüllt wird. Der Laserstrahl wird durch das Fenster einer Hochvakuumkammer auf diese Vertiefungen fokussiert und das darin befindliche Pulver durch eine langsame Bewegung des Laserstrahls entlang der Vertiefungen aufgeschmolzen. Anschließend erstarrt das aufgeschmolzene Material zum fertigen Bauteil. Die zugehörige Vorrichtung weist eine Scanneroptik auf, die entlang eines Trägerarms parallel zur Objektoberfläche verfahren werden kann. Eine weitere Linearachse dient der Einstellung des Abstandes der Scanneroptik zur Objektfläche.
Diese Druckschrift bezieht sich allerdings nicht auf das Gebiet des sogenannten Rapid Prototyping, sondern auf die direkte Herstellung von metallischen Mikroteilen mit einer Schablone, bei der sehr langsame Bearbeitungsgeschwindigkeiten zwischen 0,1 mm und 100 mm pro Stunde eingesetzt werden.

Die Aufgabe der vorliegenden Erfindung besteht darin, eine Vorrichtung und ein Verfahren zum Abtasten einer Objektfläche mit einem Laserstrahl, insbesondere zum selektiven Laser-Schmelzen, anzugeben, die eine ausreichend große Bearbeitungsfläche und Bearbeitungsgeschwindigkeit bei einem geringen Durchmesser des fokussierten Laserstrahls ermöglichen.

### Darstellung der Erfindung

Die Aufgabe wird mit der Vorrichtung nach Anspruch 1 und dem Verfahren nach Anspruch 10 gelöst. Vorteilhafte Ausgestaltungen der Vorrichtung und des Verfahrens sind Gegenstand der Unteransprüche.

Erfindungsgemäß wird ausgenutzt, daß beim selektiven Laser-Schmelzen oder Laser-Sintern der Durchmesser des Laserstrahls beim Auftreffen auf die Bearbeitungsfläche kleiner als die Breite der zu schmelzenden Fläche bzw. Struktur ist. Hierdurch ist es erforderlich, den Laser auf mehreren nebeneinanderliegenden Spuren zu führen, um die gesamte zu schmelzende Fläche abzudecken. Erfindungsgemäß wurde dabei erkannt, daß durch geeignete Aufteilung dieser Fläche bzw. der Laserspuren auf der Fläche zwei unterschiedlich schnelle Systeme für die Führung des Laserstrahls eingesetzt werden können. Während der Laserstrahl zum Abtasten von kleinen Teilflächen mittels einer Scanneroptik, wie sie aus dem Stand der Technik bekannt ist, mit hoher Geschwindigkeit hin und herbewegt werden kann, wird die gesamte Scanneroptik mit Hilfe zweier Linearachsen über der Bearbeitungsfläche weiter bewegt, um auf diese Weise die weiteren Teilflächen zu erreichen. Für diese Linearbewegung, die größtenteils quer zur Abtastrichtung der Scanneroptik erfolgt, ist nur eine geringere Geschwindigkeit erforderlich. Die Abtastbewegung der Scanneroptik selbst muß jeweils nur einen kleinen Bereich abdecken, so daß dafür eine Fokussieroptik mit kurzer Brennweite eingesetzt werden kann. Die erfindungsgemäße Vorrichtung sieht somit ein Plottersystem mit zwei voneinander unabhängigen Linearachsen bzw. -antrieben vor, auf dem zusätzlich eine Scanneroptik angebracht ist.

Die erfindungsgemäße Vorrichtung vereint damit die Vorteile der schnellen Bewegung eines fokussierten Laserstrahls mittels eines Scanners mit den Vorteilen der von der Brennweite der Fokussieroptik unabhängigen Größe des Bearbeitungsfeldes durch die Bewegung des Strahls mittels eines Plotters. Weiterhin wird durch diese Vorrichtung auf einfache Weise die Mitführung einer Schutzgasdüse ermöglicht. Der Laserstrahl wird vorzugsweise mit einer kurzbrennweitigen Optik auf einen Durchmesser von < 200 µm fokussiert und gleichzeitig kann eine beliebig große Fläche mit Geschwindigkeiten von > 200 mm/s damit bearbeitet werden.

Bei dem erfindungsgemäßen Verfahren wird die zu bearbeitende Fläche in vorzugsweise streifenförmige Teilflächen (Streifen) unterteilt. Die Bearbeitung der gesamten Fläche erfolgt, indem nacheinander die einzelnen Streifen bearbeitet werden. Die einzelnen Streifen werden bearbeitet, indem die Fläche innerhalb eines Streifens spurweise mit dem Laserstrahl abgefahren wird. Dabei wird eine hohe Bewegungsgeschwindigkeit des Laserstrahls innerhalb einer Spur benötigt. Die Geschwindigkeit, mit der der Laserstrahl von Spur zu Spur versetzt wird, ist demgegenüber geringer.
Zur Bewegung des Laserstrahls wird ein Scanner auf einen Plotter montiert. Die schnelle Bewegung des Laserstrahls innerhalb einer Spur wird vom Scanner ausgeführt. Die Bewegung des Laserstrahls von Spur zu Spur und von Streifen zu Streifen wird vom Plotter ausgeführt, indem mit dem Plotter der gesamte Scanner weiter bewegt wird.
Da mit dieser Anordnung die Auslenkung des Laserstrahls durch den Scanner nur innerhalb des jeweiligen Streifens erfolgt, entspricht die maximale Auslenkung des Laserstrahls durch den Scanner der Streifenbreite. Wird die Streifenbreite klein gewählt (z.B. < 5 mm), so kann die Laserstrahlung mit einer kurzbrennweitigen Fokussieroptik (z.B. f < 100 mm) auf einen entsprechend kleinen Durchmesser (z.B. < 200 µm) fokussiert werden. Durch geeignete Wahl der Streifenbreite und der Fokussieroptik können auch Fokusdurchmesser des Laserstrahls von 10 µm in der Bearbeitungsebene erreicht werden.

Durch Montage einer Schutzgasdüse auf dem Plotter wird diese mit der Plotterbewegung mitgeführt. Da die Düse jedoch nur mit dem Plotter mitbewegt wird, aber nicht der Bewegung des Laserstrahls durch den Scanner folgt, wird die Breite der Düsenöffnung größer oder gleich der Streifenbreite gewählt. Damit ist gewährleistet, daß in der Wechselwirkungszone des Laserstrahls ständig eine Schutzgasströmung vorhanden ist.

### Wege zur Ausführung der Erfindung

Die Erfindung wird nachfolgend anhand eines Ausführungsbeispiels in Verbindung mit den Zeichnungen nochmals erläutert. Hierbei zeigen
- Figur 1: ein Beispiel für eine Zerlegung einer zu bearbeitenden Fläche in Teilflächen;
- Figur 2: schematisch ein Beispiel der erfindungsgemäßen Vorrichtung in Aufsicht; und
- Figur 3: das Beispiel aus Figur 2 in Seitenansicht.

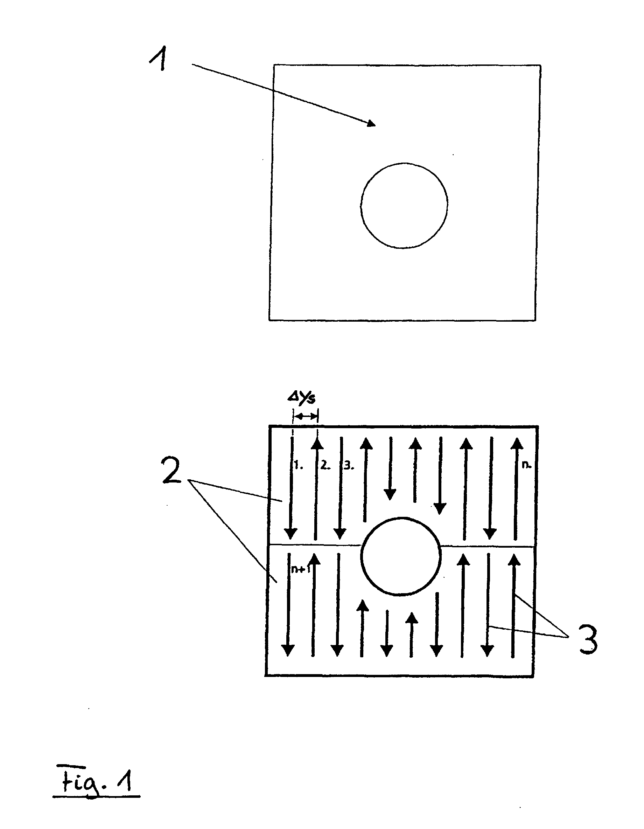

Im oberen Teil der Figur 1 ist eine zu bearbeitende Gesamtfläche 1 eines Bauteils dargestellt, die mit dem Laserstrahl abgetastet werden soll. Die zu bearbeitende Fläche 1 wird in streifenförmige Teilflächen 2 unterteilt, wie im unteren Teil der Figur vereinfacht mit nur 2 Teilflächen dargestellt ist. Eine geeignete Aufteilung in Teilflächen kann mit Hilfe einer Datenverarbeitungsanlage durchgeführt werden, mit der die Vorrichtung betrieben werden kann. Die Bearbeitung der gesamten Fläche erfolgt, indem nacheinander die einzelnen Teilflächen bearbeitet werden. Hierzu wird jede Teilfläche spurweise mit dem Laserstrahl abgefahren. Die Pfeile 1, 2 ... , n zeigen die einzelnen Spuren 3 und deren Abtastrichtung für die Bearbeitung der ersten Teilfläche in der Figur. Diese spurweise Abtastung wird mit Hilfe der Scanneroptik durchgeführt, so daß die für das Laser-Schmelzen erforderliche hohe Bewegungsgeschwindigkeit des Laserstrahls innerhalb jeder Spur 3 eingehalten wird. Die Geschwindigkeit, mit der der Laserstrahl von Spur zu Spur versetzt wird, ist demgegenüber geringer. Diese Bewegung wird über die Plottermechanik erzeugt, an der die Scanneroptik befestigt ist. Der Plotter sorgt auch für die Bewegung des Laserstrahls von Teilfläche zu Teilfläche, d.h. in der Figur vom Ende der Spur n der ersten Teilfläche zum Anfang der Spur n+1 der nächsten Teilfläche. Der Abstand Δys der Spuren wird hierbei vorzugsweise so eingestellt, daß diese unter Berücksichtigung des Durchmessers des Laserstrahls in der Bearbeitungsebene teilweise überlappen.
Die Breite der einzelnen streifenförmigen Teilflächen wird so gewählt, daß während der Abtastung ein ausreichend kleiner Fokusdurchmesser des Laserstrahls über der gesamten Breite jeder Teilfläche aufrecht erhalten wird. Dies muß selbstverständlich unter Berücksichtigung der eingesetzten Fokussieroptik erfolgen.

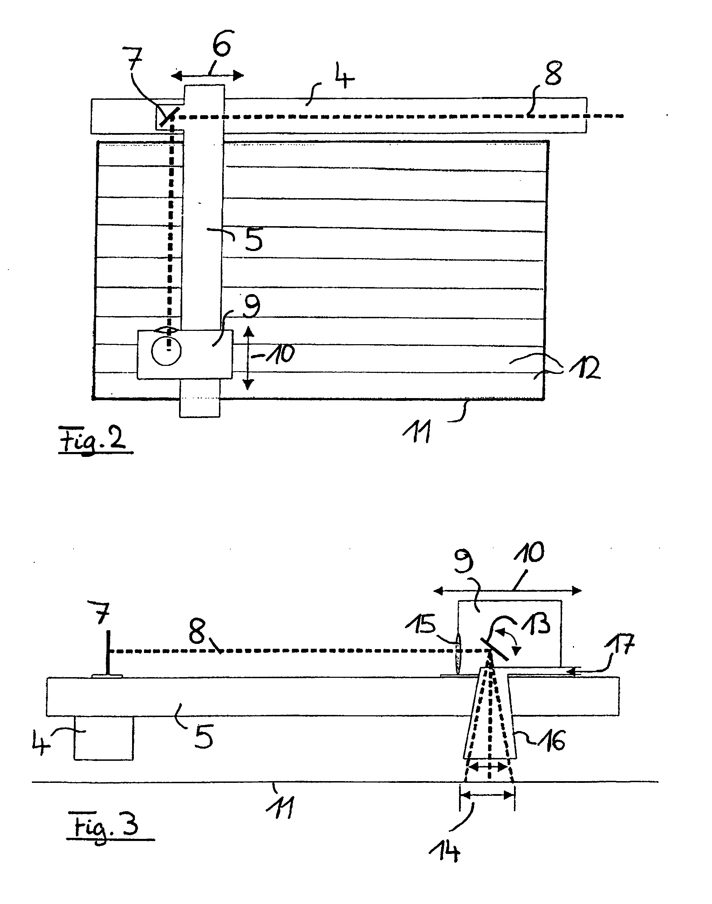

Figur 2 zeigt schematisch ein Beispiel der erfindungsgemäßen Vorrichtung in Aufsicht. Die Vorrichtung umfaßt zwei Linearachsen 4 (x-Achse) und 5 (y-Achse) einer Plottermechanik. Die Linearachse 5 ist hierbei in Pfeilrichtung (Pfeil 6) entlang der Linearachse 4 verschiebbar. Im Bereich des Kreuzungspunktes der beiden Achsen ist an der Linearachse 5 ein Umlenkspiegel 7 befestigt, der einen entlang der Linearachse 4 einfallenden Laserstrahl 8 auf ein auf der Linearachse 5 angeordnetes Trägerelement mit einem Scannersystem 9 lenkt. Das Trägerelement mit dem Scannersystem ist entlang der y-Achse 5 in Pfeilrichtung (Pfeil 10) verschiebbar. Das Scannersystem kann beispielsweise über einen Galvanometer-Antrieb verfügen. In der Figur ist ebenfalls die Bearbeitungsfläche 11 gezeigt, die in einzelne Teilflächen 12 aufgeteilt ist. Durch entsprechende Verschiebung der Linearachse 5 entlang der Linearachse 4 und des Trägerelementes entlang der Linearachse 5 kann mit dem Trägerelement jede Position der Bearbeitungsfläche erreicht werden.

Eine Seitenansicht dieser beispielhaften Vorrichtung ist in Figur 3 gezeigt. Hierbei wurden die gleichen Bezugszeichen für die gleichen Elemente wie in Figur 2 gewählt. In der Figur ist ein drehbarer Umlenkspiegel 13 des Scannersystems zu erkennen, der den vom Umlenkspiegel 7 einfallenden Laserstrahl 8 auf die Bearbeitungsfläche 11 richtet. Der durch Drehung des Spiegels 13 erreichbare Winkelbereich der Ablenkung des Laserstrahls ist schematisch durch drei angedeutete Strahlverläufe dargestellt. In den meisten Anwendungsfällen liegt dieser Winkelbereich zwischen 1° und 15° für den gesamten Scanbereich. Durch diesen Winkelbereich wird eine Abtastbreite auf der Bearbeitungsfläche verwirklicht, die der Streifenbreite 14 der Teilflächen 12 entspricht.
Die Figur zeigt auch die Fokussierlinse 15 vor dem Scannersystem, mit der der Laserstrahl auf die Bearbeitungsfläche fokussiert wird. Selbstverständlich sind auch andere Fokussieroptiken sowohl vor wie auch nach dem Umlenkspiegel 13 möglich.

Figur 3 zeigt weiterhin eine Schutzgasdüse 16, die am Trägerelement befestigt ist. Über diese Schutzgasdüse wird während der Bearbeitung Schutzgas 17 auf die Wechselwirkungszone geleitet. Im vorliegenden Beispiel ist die Schutzgasdüse so ausgestaltet, daß die Breite ihrer Austrittsöffnung der Breite 14 der Teilflächen 12 entspricht. Damit ist gewährleistet, daß in der Wechselwirkungszone des Laserstrahls ständig eine Schutzgasströmung vorhanden ist.

In einer weiteren, nicht dargestellten Ausführungsform umfaßt die Scanneroptik neben dem Spiegel 13 noch einen zweiten Umlenkspiegel im Strahlengang des Lasers, der eine Abtastung senkrecht zu der mit dem Spiegel 13 erzeugten Abtastrichtung ermöglicht. Mit einer derartigen Ausführungsform können nach dem Abtasten der Teilflächen einer Bauteilschicht in einer ersten Abtastrichtung, die durch den Umlenkspiegel 13 vorgegeben ist, die nebeneinanderliegenden Bahnen der Teilflächen der nächsten Bauteilschicht durch den Einsatz des zweiten Spiegels senkrecht zu denen der gerade abgetasteten Bauteilschicht gewählt werden. Dies ist für die Festigkeit des Bauteils von Vorteil.

Mit der erfindungsgemäßen Vorrichtung kann in vorteilhafter Weise eine Bearbeitungsfläche von > 300 × 300 mm² mit einem Durchmesser des fokussierten Laserstrahls von < 200 µm mit einer Geschwindigkeit von > 200 mm/s bearbeitet werden. Selbstverständlich kann auch mit geringeren Scangeschwindigkeiten von beispielsweise 50 mm/s gearbeitet werden.

Die erfindungsgemäße Vorrichtung kann besonders vorteilhaft in Verbindung mit einer Anlage zum selektiven Laser-Schmelzen, wie sie in der DE 196 49 865 C1 beschrieben ist, eingesetzt werden.

## Patentansprüche

1. Vorrichtung zum Abtasten einer Objektfläche mit einem Laserstrahl, insbesondere zum selektiven Laser-Schmelzen, mit
- einer Plottermechanik mit zwei Linearachsen (4, 5) zur Positionierung und Bewegung eines Trägerelementes über der Objektfläche (11),
- einer Fokussieroptik (15) am Trägerelement zum Fokussieren des Laserstrahls auf die Objektfläche (11),
- einer optischen Einrichtung, die den Laserstrahl (8) zum Trägerelement führt oder am Trägerelement bereitstellt, wobei
die Plottermechanik derart angeordnet ist, daß sie das Trägerelement in einem Abstand über der Objektfläche (11) positionieren und bewegen kann, der den Einsatz einer Fokussieroptik (15) kurzer Brennweite zur Fokussierung des Laserstrahls auf einen Durchmesser von < 200 µm in der Objektfläche (11) ermöglicht, und **gekennzeichnet durch**
- eine Abtasteinrichtung (9) am Trägerelement, die den Laserstrahl auf die Objektfläche lenkt und in einem vorgebbaren Winkelbereich hin und her bewegt,

2. Vorrichtung nach Anspruch 1,
**dadurch gekennzeichnet,**
**daß** die Abtasteinrichtung (9) ein um eine erste Achse drehbares Umlenkelement (13) im Strahlengang des Laserstrahls (8) umfaßt.

3. Vorrichtung nach Anspruch 2,
**dadurch gekennzeichnet,**
**daß** die Abtasteinrichtung (9) ein weiteres um eine zweite Achse drehbares Umlenkelement im Strahlengang des Laserstrahls umfaßt, wobei die erste und die zweite Achse senkrecht aufeinander stehen.

4. Vorrichtung nach einem der Ansprüche 1 bis 3,
**dadurch gekennzeichnet,**
**daß** der vorgebbare Winkelbereich zwischen 1° und 15° liegt.

5. Vorrichtung nach einem der Ansprüche 1 bis 4,
**dadurch gekennzeichnet,**
**daß** die optische Einrichtung eine Lichtleitfaser, umfaßt, die mit einem Ende am Trägerelement fixiert ist.

6. Vorrichtung nach einem der Ansprüche 1 bis 4,
**dadurch gekennzeichnet,**
**daß** die optische Einrichtung zumindest ein Umlenkelement (7) umfaßt, das auf einer der Linearachsen (4, 5) fixiert ist.

7. Vorrichtung nach einem der Ansprüche 1 bis 4,
**dadurch gekennzeichnet,**
**daß** die optische Einrichtung eine am Trägerelement fixierte Laserstrahlquelle aufweist.

8. Vorrichtung nach einem der Ansprüche 1 bis 7,
**dadurch gekennzeichnet,**
**daß** am Trägerelement eine Gasdüse (16) mit einer Austrittsöffnung vorgesehen ist, über die Schutzgas auf den innerhalb des vorgebbaren Winkelbereichs des Laserstrahls liegenden Bereich der Objektfläche gerichtet werden kann.

9. Vorrichtung nach Anspruch 8,
**dadurch gekennzeichnet,**
**daß** die Austrittsöffnung breiter ist als der innerhalb des vorgebbaren Winkelbereichs des Laserstrahls liegende Bereich der Objektfläche.

10. Verfahren zum Abtasten einer Objektfläche mit einem Laserstrahl, insbesondere zum selektiven Laser-Schmelzen, **dadurch gekennzeichnet, daß** die Objektfläche (1, 11) in einzelne Teilflächen (2, 12) unterteilt wird und die einzelnen Teilflächen in nebeneinanderliegenden Bahnen (3) mit dem Laserstrahl abgetastet werden, wobei die Bewegung des Laserstrahls auf jeder der nebeneinanderliegenden Bahnen mit einer Scanneroptik (9) und die Bewegung des Laserstrahls von Bahn zu Bahn und von Teilfläche zu Teilfläche von einer Plottermechanik ausgeführt werden, die die Scanneroptik trägt.

11. Verfahren nach Anspruch 10,
**dadurch gekennzeichnet,**
**daß** als Teilflächen (2, 12) schmale Streifen gewählt werden.

12. Verfahren nach Anspruch 10 oder 11 zum selektiven Laser-Schmelzen, wobei die Objektfläche einer Bauebene eines Bauteils entspricht
**dadurch gekennzeichnet,**
**daß** nach dem Abtasten einer Bauebene die nebeneinanderliegenden Bahnen (3) der Teilflächen der nächsten Bauebene senkrecht zu denen der gerade abgetasteten Bauebene gewählt werden.

## Claims

1. A device using a laser beam to scan an area of an object, in particular, for selective laser melting, having
- a plotter mechanic with two linear axes (4, 5) for positioning and moving a carrier element over said area of said object (11),
- a focusing optic (15) at said carrier element for focusing said laser beam on said area of said object (11),
- an optical means, which guides said laser beam (8) to said carrier element or provides said laser beam at said carrier element,
wherein said plotter mechanic is disposed in such a manner that said plotter mechanic can position and move said carrier element at a distance over said area of said object (11), which distance permits the use of a focusing optic (15) of short focal length for focusing said laser beam to a diameter of < 200 µm in said area of said object (11), and
**characterized by**
a scanning means (9) at said carrier element, which guides said laser beam to said area of said object and moves said laser beam back and forth in a presetable angle.

2. A device according to claim 1,
**characterized by**
said scanning means (9) comprising a deviation element (13) which is rotatable about a first axis in the beam path of said laser beam (8).

3. A device according to claim 2,
**characterized by**
said scanning means (9) comprising an additional deviation element rotatable about a second axis in said beam path of said laser beam, with said first and said second axis standing perpendicular to each other.

4. A device according to one of the claims 1 to 3,
**characterized by**
the presetable angle lying between 1° and 15°.

5. A device according to one of the claims 1 to 4,
**characterized by**
said optical means comprising a fiber-optical light guide, which is secured with one end to said carrier element.

6. A device according to one of the claims 1 to 4,
**characterized by**
said optical means comprising at least one deviation element (7), which is secured on one of said linear axes (4, 5).

7. A device according to one of the claims 1 to 4,
**characterized by**
said optical means being provided with a laser beam source which is secured on said carrier element.

8. A device according to one of the claims 1 to 7,
**characterized by**
a gas nozzle (16) having an outlet opening via which the protective gas can be directed at the region of said area of said object lying within the presetable angle of said laser beam being provided on said carrier element.

9. A device according to claim 8,
**characterized by**
said outlet opening being wider than said region of said area of said object lying within said presetable angle of said laser beam.

10. A process using a laser beam to scan an area of an object, in particular for selective laser melting,
**characterized in that**
said area of said object (1, 11) is divided into individual subsections (2, 12) and said individual subsections are scanned in adjacent paths (3) with a laser beam, with the movement of said laser beam on each of said adjacent paths being executed by a scanner optic (9) and said movement of said laser beam from path to path and from subsection to subsection being executed out by a plotter mechanic carrying said scanner optic.

11. A process according to claim 10,
**characterized by**
narrow strips being selected as said subsections (2, 12).

12. A process according to claim 10 or 11 for selective laser melting, with said area of said object corresponding to one component plane of a component
**characterized by**
that after scanning a component plane, said adjacent paths (3) of said subsections of the next component plane being selected perpendicular to those of the just scanned component plane.

## Revendications

1. Dispositif pour balayer une surface d'objet par un faisceau laser, en particulier pour la fusion sélective au laser, comportant :
- un mécanisme traçant ayant deux axes linéaires (4, 5) pour positionner et déplacer un élément de support au-dessus de la surface de l'objet (11),
- une optique de focalisation (15) sur l'élément de support pour focaliser le faisceau laser sur la surface de l'objet (11),
- un dispositif optique qui guide le faisceau laser (8) vers l'élément de support ou rend disponible le faisceau laser sur l'élément de support,
le mécanisme traçant étant agencé de sorte qu'il peut positionner et déplacer l'élément de support à une distance au-dessus de la surface de l'objet (11) qui permet l'utilisation d'une optique de focalisation (15) de courte distance focale pour focaliser le faisceau laser sur un diamètre de <200 µm dans la surface de l'objet (11) et,
**caractérisé par** un dispositif de balayage (9) sur l'élément de support, qui dévie le faisceau laser sur la surface de l'objet et le déplace en va-et-vient dans une plage angulaire pouvant être prédéfinie.

2. Dispositif selon la revendication 1,
**caractérisé en ce que** le dispositif de balayage (9) comporte un élément de renvoi (13) pouvant tourner autour d'un premier axe dans le trajet des rayons du faisceau laser (8).

3. Dispositif selon la revendication 2,
**caractérisé en ce que** le dispositif de balayage (9) comporte un autre élément de renvoi pouvant tourner autour d'un second axe dans le trajet des rayons du faisceau laser, les premier et second axes étant orthogonaux l'un à l'autre.

4. Dispositif selon une des revendications 1 à 3,
**caractérisé en ce que** la plage angulaire pouvant être prédéfinie est comprise entre 1° et 15°.

5. Dispositif selon une des revendications 1 à 4,
**caractérisé en ce que** le dispositif optique comporte une fibre optique qui est fixée à une extrémité à l'élément de support.

6. Dispositif selon une des revendications 1 à 4,
**caractérisé en ce que** le dispositif optique comporte au moins un élément de renvoi (7) qui est fixé sur un des axes linéaires (4, 5).

7. Dispositif selon une des revendications 1 à 4,
**caractérisé en ce que** le dispositif optique présente une source de faisceau laser fixée à l'élément de support.

8. Dispositif selon une des revendications 1 à 7,
**caractérisé en ce que**, sur l'élément de support, est prévue une buse de gaz (16) ayant une ouverture de sortie, par laquelle un gaz protecteur peut être orienté sur la zone de la surface de l'objet se trouvant à l'intérieur de la plage angulaire pouvant être prédéfinie du faisceau laser.

9. Dispositif selon la revendication 8,
**caractérisé en ce que** l'ouverture de sortie est plus large que la zone de la surface de l'objet se trouvant à l'intérieur de la plage angulaire pouvant être prédéfinie du faisceau laser.

10. Procédé pour balayer une surface d'objet comportant un faisceau laser, en particulier pour la fusion sélective au laser,
**caractérisé en ce que** la surface de l'objet (1, 11) est subdivisée en surfaces partielles individuelles (2, 12), et les surfaces partielles individuelles sont balayées par le faisceau laser en voies adjacentes (3), le déplacement du faisceau laser sur chacune des voies adjacentes étant effectué par une optique de balayage (9) et le déplacement du faisceau laser de voie en voie et de surface partielle en surface partielle étant effectué par un mécanisme traçant qui porte l'optique de balayage.

11. Procédé selon la revendication 10,
**caractérisé en ce que** des bandes étroites sont choisies comme surfaces partielles (2, 12).

12. Procédé selon la revendication 10 ou 11 pour la fusion sélective au laser, la surface de l'objet correspondant à un plan d'une pièce,
**caractérisé en ce que**, après le balayage d'un plan, les voies adjacentes (3) des surfaces partielles du plan suivant sont choisies orthogonalement à celles du plan juste balayé.
